# EUROPÄISCHE PATENTANMELDUNG

(11) **EP 2 666 682 A1**
(43) Veröffentlichungstag der Anmeldung: **27.11.2013**
(21) Anmeldenummer: 12199400.8
(22) Anmeldetag: 27.12.2012
(51) Int. Cl.: B60S 3/04, B05B 15/06

(54) **Drehkreisel für eine Reinigungsanlage**

(30) Priorität: 22.05.2012 DE 202012101872 U
(71) Anmelder: syntecs GmbH Reinigungssysteme, 33758 Schloß Holte-Stukenbrock (DE)
(72) Erfinder: Rarbach, Ottmar, 33689 Bielefeld (DE)
(74) Vertreter: Manitz, Finsterwald & Partner GbR

(57) **Zusammenfassung**

Ein Drehkreisel (1) für eine Reinigungsanlage weist einen an einer Drehrohraufnahme (3) mit einem Drehgelenk drehbar gelagertes Drehrohr (4) auf, das als gekrümmter Hohlstab ausgebildet ist.

## Beschreibung

Die vorliegende Erfindung betrifft einen Drehkreisel einer Reinigungsanlage nach dem Oberbegriff des Anspruchs 1.

Ein gattungsgemäßer Drehkreisel ist aus der DE 91 02 404 U1 bekannt.

Bei einem aus der DE 196 42 847 C2 bekannten Drehkreisel ist das Drehrohr als Z-förmiges Teil ausgebildet, mit Armteilen, die über eine Abkröpfung miteinander verbunden sind, was den Vorteil bietet, dass zwei solcher Drehkreisel in einem Abstand nebeneinander positioniert werden können, der kleiner ist als die Länge des Z-förmigen Drehrohres, da durch die Z-Form ein Höhenversatz des von dem Drehlager entfernten Endes des Drehrohres erlaubt, dieses unter dem Drehlager des benachbarten Drehkreisels hindurch zu führen.

Nachteilig ist hier, dass die Herstellung eines solchen Z-förmigen Drehrohrs mit über eine Abkröpfung verbundenen Armteilen sehr aufwendig und damit mit hohen Herstellungskosten verbunden ist.

Aufgabe der vorliegenden Erfindung ist es, einen herstellungstechnisch einfacheren und damit auch kostengünstigeren Drehkreisel bereit zu stellen.

Diese Aufgabe wird durch einen Drehkreisel mit den Merkmalen des Anspruchs 1 gelöst.

Durch die konkave oder konvexe Ausbildung des Drehrohrs über dessen Längserstreckung, d.h. über dessen gesamte oder im wesentlichen gesamte Länge, ist einerseits ermöglicht, dass mehrere solcher Drehkreisel in einem Abstand nebeneinander angeordnet werden können, bei dem das Drehrohr des einen Drehkreisels unterhalb der Aufhängung des benachbarten Drehkreisels durchschwenkbar ist. Zum zweiten ist die Herstellung eines solchen als Hohlstab ausgebildeten konvex oder konkav gebogenen Drehrohrs sehr einfach und kostengünstig.

Schließlich kann durch die konkave oder konvexe Biegung des Drehrohrs das von dem Drehgelenk abgewandte Ende des Drehrohrs auf einer Höhe gehalten werden, die etwa der Höhe des Drehrohrs am Drehgelenk entspricht, so dass der erfindungsgemäße Drehkreisel auch an Decken von Räumen oder allgemeinen Waschplätzen mit relativ niedriger Deckenhöhe angebracht werden kann, ohne die Länge des Drehrohrs vermindern zu müssen.

Vorteilhafte Ausgestaltungen der Erfindung sind Gegenstand der Unteransprüche.

Gemäß einer vorteilhaften Ausführungsvariante der Erfindung weist die Biegung des Drehrohrs einen konstanten Krümmungsradius auf, was die Herstellungskosten sehr gering hält.

In einer alternativen Ausführungsvariante ist die Biegung des Drehrohrs mit einem abschnittsweise veränderten Krümmungsradius ausgebildet, so dass sich je nach Anforderung auch relativ gradlinige Bereiche des Drehrohrs an einem Drehrohrbereich mit stärkerer Krümmung anschließen können.

Um eine stabile Lagerung des große Hebelkräfte erzeugenden Drehrohres an der Drehaufnahme zu erhalten, kann es vorteilhaft sein, wenn die Drehrohraufnahme ein Lagergehäuse eines Kugellagers aufweist, wobei ein Stabilisierungselement einerseits an dem Drehrohr und andererseits an dem Lagergehäuse befestigt ist. Durch eine solche als Versteifung wirkende Stabilisierung lässt sich das gekrümmte Drehrohr vorteilhaft gegenüber dem Lagergehäuse abstützen.

Zum Schutz des Lagergehäuses kann es weiterhin vorteilhaft sein, wenn eine Gummidichtung zwischen einer Aufnahmewelle der Drehrohraufnahme und dem Lagergehäuse des Kugellagers vorgesehen ist.

Um den vertikalen Aufbau des erfindungsgemäßen Drehkreisels insgesamt möglichst klein zu halten, kann es nach einer weiteren vorteilhaften Ausführungsform vorteilhaft sein, wenn die Drehrohraufnahme an einer Montageplatte derart angebracht ist, dass sich nach Befestigung der Montageplatte an einer Montageebene, beispielsweise einer Decke oder einer Wand, die beiden Enden des Drehrohres etwa auf gleichen Höhe befinden.

Bevorzugt weist die Krümmung bzw. die Biegung des Drehrohres keinen Wendepunkt auf, was die Herstellung vereinfacht.

Nach einer weiteren vorteilhaften Ausführungsform kann der Hohlstab einen geschlossenen Querschnitt aufweisen. Alternativ kann der Hohlstab auch geschlitzt ausgebildet sein, beispielsweise um einen Schlauch auf einfache Weise oben in das Drehrohr einlegen zu können.

Bei der erfindungsgemäßen Anordnung mehrerer Drehkreisel einer Reinigungsanlage an einer Basis, insbesondere an einer Raumdecke, ist die Ausrichtung der Biegung benachbarter Drehrohre alternierend. Bei einer solchen Anordnung mehrerer erfindungsgemäßen Drehkreisel zeigt sich als weiterer Vorteil, dass bei der Montage einer solchen Anordnung mehrerer Drehkreisel die gleichen Drehrohre bei den jeweiligen Drehkreiseln verwendet werden können und diese bei der Montage lediglich entsprechend über dem Boden zur Decke konkav oder konvex montiert werden müssen.

Nachfolgend werden Ausführungsbeispiele der Erfindung anhand der beiliegenden Zeichnungen näher erläutert. Es zeigen:
Fig. 1 eine schematische Seitenansicht einer Ausführungsvariante eines erfindungsgemäßen Drehkreisels,
Fig. 2 eine schematische Seitenansicht einer weiteren Ausführungsvariante eines erfindungsgemäßen Drehkreisels,
Fig. 3a, b eine Anordnung der in den Fig. 1 und Fig. 2 gezeigten Drehkreisel in einer ersten und einer zweiten Position,
Fig. 4 eine Frontansicht des Drehkreisels aus Fig. 1 oder Fig. 2 und
Fig. 5 eine Seitenschnittansicht des Drehkreisels aus Fig. 1 entlang einer in Fig. 3 markierten Schnittebene, und
Fig. 6 eine Seitenschnittansicht des Drehkreisels aus Fig. 2 entlang einer in Fig. 3 markierten Schnittebene.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Drehkreisels, des Drehrohrs, des Drehgelenks und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

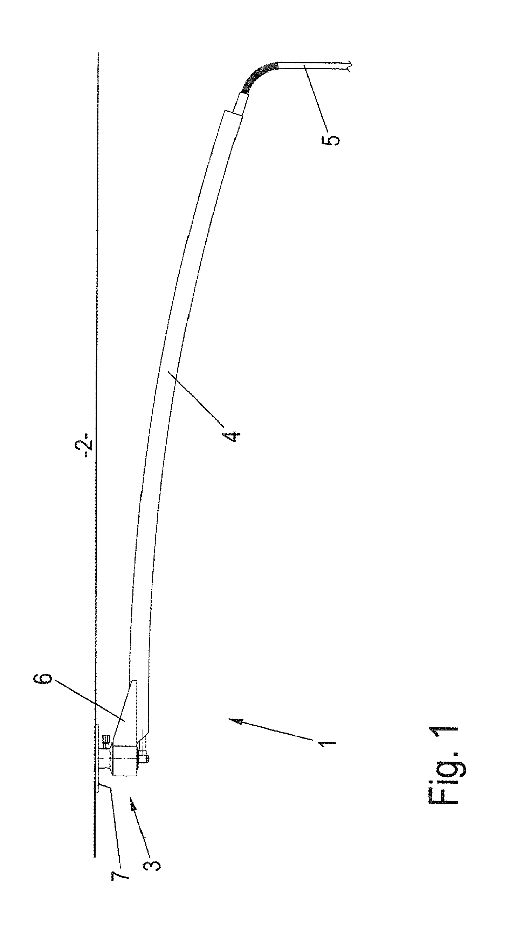

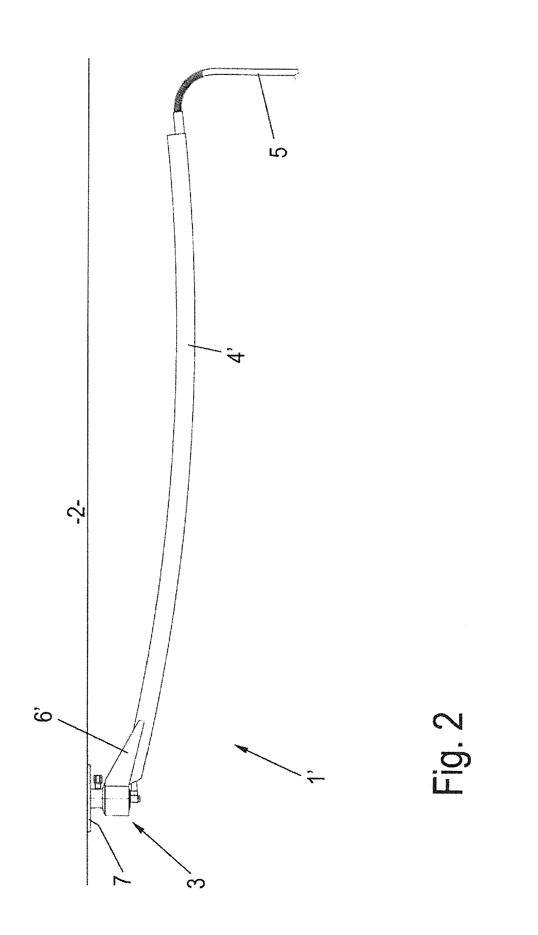

In den Fig. 1 bis Fig. 3 sind mit den Bezugszeichen 1, 1' insgesamt zwei Ausführungsvarianten eines erfindungsgemäßen Drehkreisels bezeichnet, der bei den dargestellten Ausführungsbeispielen als Deckenkreisel ausgebildet und montiert ist. Die Deckenkreisel 1, 1' weisen dabei im Wesentlichen ein Drehgelenk, das bevorzugt über eine Montageplatte 7 mit einer Drehrohraufnahme 3 an einer Montageebene 2, insbesondere einer Raumdecke oder einem über einem Waschplatz waagerecht angeordneten Balken oder dergleichen befestigbar ist, ein an dem Drehgelenk befestigtes Drehrohr 4, 4' und einen durch das Drehgelenk und das Drehrohr 4, 4' an die Drehrohraufnahme 3 angeschlossenen Hoch- oder Niederdruckschlauch 5 auf, an den ein Waschwerkzeug, wie beispielsweise eine Waschbürste oder eine Hochdrucklanze anschließbar ist.

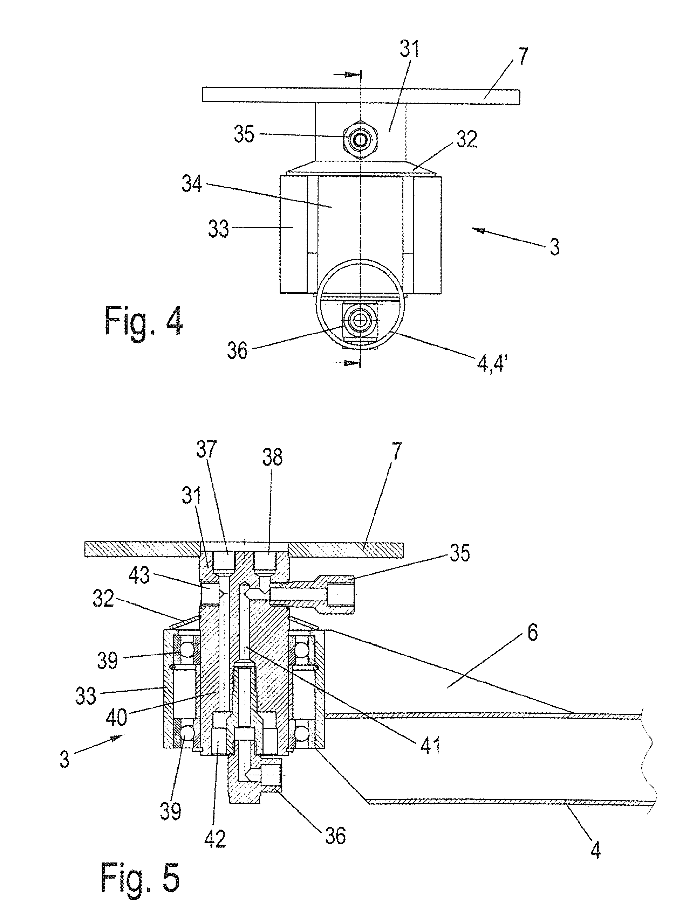

Wie in den Fig. 4 bis Fig. 6 gezeigt ist, weist die Drehrohraufnahme 3 eine Aufnahmewelle 31 mit einer ersten Bohrung 41 auf, durch die eine unter Hochdruck oder Niederdruck stehende Flüssigkeit oder ein Schaum durchleitbar ist. Über die Bohrung 41 wird dabei eine Verbindung zwischen einer Anschlussöffnung 42 zur Aufnahme eines Drehgelenks 36 und - über eine Anschlussöffnung 38 - einer in der Montageebene 2 angeordneten Flüssigkeitsleitung, oder einem verbundenen Anschlussstück 35 geschaffen, das unterhalb der Montageebene 2 seitlich in die Aufnahmewelle 31 eingelassen ist. Das Drehgelenk 36 ist dabei um eine Längsachse z der Drehrohraufnahme 3 drehbar und dient zur Weiterleitung der Flüssigkeit in einen Hochdruck- oder Niederdruckschlauch 5 oder ein Rohr, der oder das in dem Drehrohr 4, 4' geführt ist.

Um in dem Drehrohr 4, 4' unterschiedliche Flüssigkeiten durchleiten zu können, ist in der Drehrohraufnahme 3 bevorzugt eine zweite Bohrung 40 vorgesehen, wobei die zweite Bohrung 40 der Drehrohraufnahme 3 an einem ersten Ende in eine Anschlussöffnung 37 oder 43 zur Einleitung einer weiteren Flüssigkeit mündet. Dabei mündet ein zweites Ende der zweiten Bohrung 40 in einen erweiterten Bereich der Anschlussöffnung 42 der Drehrohraufnahme 3, in die eine weitere Drehrohraufnahme montiert werden kann. Dadurch ist es möglich, mehrere konvexe Drehrohre 4 oder mehrere konkave Drehrohre 4' unmittelbar untereinander anzuordnen.

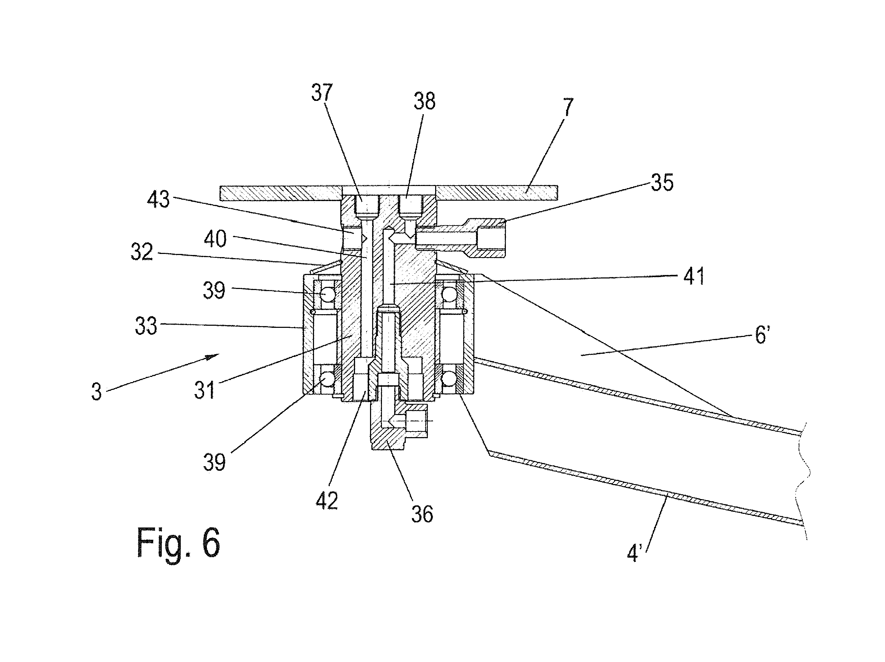

Die in den Fig. 5 und Fig. 6 gezeigten Anschlussöffnungen 37, 38 sind dabei zur Montageplatte 7 hin ausgerichtet, wobei in der Montageplatte 7 entsprechende Öffnungen vorgesehen sind, um einen Flüssigkeitsanschluss der Reinigungsvorrichtung an in einer Waschraumdecke verlegten Leitungen zu ermöglichen.

Das Drehrohr 4, 4' selbst besteht im Wesentlichen aus einem im Querschnitt zylindrischen oder polygonalen Hohlstab, der in Richtung seiner Längserstreckung konkav oder konvex zu einer Ebene senkrecht zur Längsachse z der Drehrohraufnahme 3 gebogen ist und einem an dem Hohlstab angeformten, beispielsweise geschweißten Stabilisierungselement 6, 6', welches an einem Lagergehäuse 33 eines Kugellagers 39 mit Kugeln drehbar an der Drehrohraufnahme 3 befestigt ist.

Die Stabilisierungselemente 6 , 6' unterscheiden sich dabei insofern in ihrer Formgebung, dass das relativ zur Montageebene 2 konkav angebrachte Drehrohr 4' insgesamt eine von der Aufnahmewelle 31 der Drehrohraufnahme 3 weg schräg nach unten geneigte Anbringung des Drehrohrs 4' erlaubt, während das Stabilisierungselement 6 des relativ zur Montageebene 2 konvex angebrachte Drehrohrs 4 so geformt ist, dass das Drehrohr 4 insgesamt eine von der Aufnahmewelle 31 der Drehrohraufnahme 3 weg etwa waagerechte Anbringung des Drehrohrs 4 erlaubt.

Zum Schutz des Kugellagergehäuses 33 vor Feuchtigkeit sind bevorzugt Gummidichtungen 32 zwischen der Außenfläche der Aufnahmewelle 31 der Drehrohraufnahme 3 und dem Kugellagergehäuse 33 vorgesehen.

Die Anbringung des relativ zur Montageebene 2 konkav angebrachten Drehrohrs 4' an dem Drehgelenk bzw. der Drehrohraufnahme 3 erfolgt dabei bevorzugt dergestalt, dass die beiden Enden des Drehrohrs 4' sich etwa auf gleicher Höhe befinden, d.h. dass der Abstand des einen Endes des Drehrohrs 4' zu der Decke bzw. einer Montageebene 2, an der der Deckenkreisel 1 montiert ist, etwa dem Abstand des zweiten Endes des Drehrohrs 3 von der Montagebene 2 entspricht, um den vertikalen Aufbau des Deckenkreisels 1 insgesamt möglichst klein zu halten.

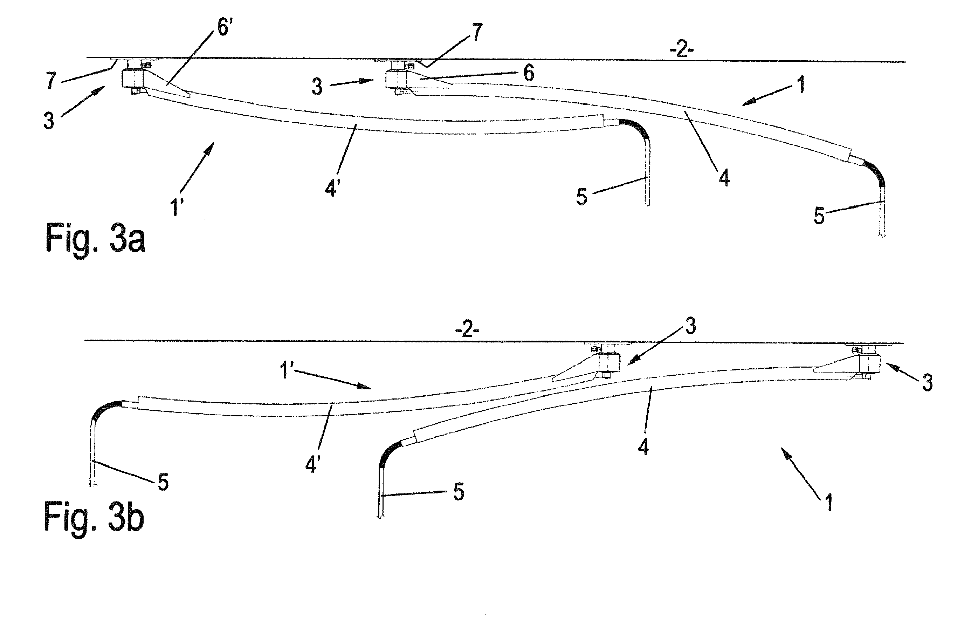

In den Fig. 3a und Fig. 3b ist eine Anordnung mehrerer, hier zwei, nebeneinander angeordneter erfindungsgemäßer Deckenkreisel 1, 1' gezeigt. Wie in den in Fig. 3a und Fig. 3b dargestellten unterschiedlichen Positionen der Drehrohre 4, 4' der Deckenkreisel 1, 1' zu erkennen ist, kann das Drehrohr 4, 4' des einen Deckenkreisel 1 problemlos unterhalb der Drehrohraufnahme 3 des benachbarten Deckenkreisels 1' hindurchgeschwenkt werden, ohne ein Bauteil des benachbarten Deckenkreisels 1 zu berühren.

Wie in den Fig. 3a und Fig. 3b außerdem gut zu erkennen ist, ist die Winkelposition der Aufhängung der benachbarten Deckenkreisel 1 je nachdem, ob das Drehrohr 4, 4' relativ zur Montageebene 2 konkav oder konvex montiert ist, mit leicht veränderter Winkelposition relativ zur Drehrohraufnahme 3 montiert, wobei bei dem konvex zur Montageebene 2 durchgebogenen Drehrohr 4 der Winkel zwischen dem Drehrohr 4 und der Drehrohraufnahme 3 spitzwinkliger ist als an dem Deckenkreisel 1', bei dem das Drehrohr 4' relativ zur Montageebene 2 konkav montiert ist.

Wie weiterhin aus den Fig. 3a und Fig. 3b hervorgeht, kann mit der erfindungsgemäßen Anordnung von zwei Drehkreiseln mit konkaver und konvexer Krümmung entlang der Längserstreckung der Drehrohre eine sehr flach bauende Anordnung erreicht werden.

### Bezugszeichenliste

1, 1': Drehkreisel
2: Montageebene
3: Drehrohraufnahme
4, 4': Drehrohr
5: Schlauch
6: Stabilisierungselement
7: Montageplatte
31: Aufnahmewelle
32: Gummidichtung
33: Kugellagergehäuse
35: Anschlussstück
36: Drehgelenk
37: Anschlussöffnung
38: Anschlussöffnung
39: Kugellager
40: Bohrung
41: Bohrung
42: Anschlussöffnung

## Patentansprüche

1. Drehkreisel (1, 1') für eine Reinigungsanlage, aufweisend ein an einer Drehrohraufnahme (3) mit einem Drehgelenk (36) drehbar gelagertes Drehrohr (4, 4'),
wobei die Drehrohraufnahme (3) mindestens eine Durchführung (40, 41) aufweist, die eine Verbindung zwischen einem Anschlussstück (38), an das eine Leitung anschließbar ist, und einer Anschlussöffnung (42) zur Aufnahme des Drehgelenks (36) schafft, **dadurch gekennzeichnet, dass**
das Drehrohr (4, 4') als in seiner Längserstreckung konkav oder konvex gebogener Hohlstab ausgebildet ist.

2. Drehkreisel (1, 1') nach Anspruch 1,
**dadurch gekennzeichnet, dass** die Biegung des Drehrohrs (4, 4') einen konstanten Krümmungsradius aufweist.

3. Drehkreisel (1 ,1') nach Anspruch 1,
**dadurch gekennzeichnet, dass**
die Biegung des Drehrohrs (4, 4') einen sich abschnittsweise verändernden Krümmungsradius aufweist.

4. Drehkreisel (1 ,1') nach zumindest einem der vorstehenden Ansprüche,
**dadurch gekennzeichnet, dass**
die Drehrohraufnahme (3) ein Lagergehäuse (33) eines Kugellagers (39) aufweist, und dass ein Stabilisierungselement (6, 6') vorgesehen ist, das an dem Drehrohr (4, 4') und an dem Lagergehäuse (33) befestigt ist.

5. Drehkreisel (1 ,1') nach zumindest einem der vorstehenden Ansprüche,
**dadurch gekennzeichnet, dass**
die Drehrohraufnahme ein Lagergehäuse (33) eines Kugellagers (39) aufweist, und dass zum Schutz des Lagergehäuses (33) eine Gummidichtung (32) zwischen einer Aufnahmewelle (31) der Drehrohraufname (3) und dem Lagergehäuse (33) vorgesehen ist.

6. Drehkreisel (1 ,1') nach zumindest einem der vorstehenden Ansprüche,
**dadurch gekennzeichnet, dass**
die Drehrohraufnahme (3) an einer Montageplatte (7) derart angebracht ist, dass sich nach Befestigung der Montageplatte (7) an einer Montageebene (2) die beiden Enden des Drehrohres (4, 4') etwa auf gleicher Höhe befinden.

7. Drehkreisel (1 ,1') nach zumindest einem der vorstehenden Ansprüche,
**dadurch gekennzeichnet, dass**
die Biegung des Drehrohres (4, 4') keinen Wendepunkt besitzt.

8. Drehkreisel (1 ,1') nach zumindest einem der vorstehenden Ansprüche,
**dadurch gekennzeichnet, dass**
der Hohlstab einen geschlossenen Querschnitt aufweist.

9. Drehkreisel (1 ,1') nach zumindest einem der vorstehenden Ansprüche,
**dadurch gekennzeichnet, dass**
die Durchführung eine Bohrung (41) ist, deren erstes Ende in eine Anschlussöffnung zur Aufnahme des Anschlussstücks mündet und deren zweites Ende in die Anschlussöffnung (42) zur Aufnahme des Drehgelenks (36) mündet.

10. Anordnung mehrerer Drehkreisel (1, 1') einer Reinigungsanlage an einer Montageebene (2), insbesondere einer Raumdecke, wobei die Drehkreisel (1, 1') nach einem der vorstehenden Ansprüche ausgebildet sind, und wobei die Ausrichtung der Biegung benachbarter Drehrohre (4, 4') alternierend ist.

11. Anordnung nach Anspruch 10,
**dadurch gekennzeichnet, dass**
die Drehrohre (4, 4') derart gebogen sind, dass ein erstes Drehrohr (4, 4') durch einen Raum vertikal unterhalb eines zweiten benachbarten Drehrohrs (4', 4) hindurch verschwenkbar ist.

12. Anordnung nach Anspruch 10 oder 11,
**dadurch gekennzeichnet, dass**
die Drehrohre (4, 4') derart positioniert sind, dass ein erstes Drehrohr (4, 4') unterhalb der Drehrohraufnahme (3) eines benachbarten Drehrohrs (4', 4) hindurch verschwenkbar ist ohne ein Bauteil des zugehörigen Drehkreisels zu berühren.
